# FASCICULE DE BREVET EUROPEEN

(11) **EP 2 064 162 B1**
(45) Date de publication et mention de la délivrance du brevet: **01.08.2012**
(21) Numéro de dépôt: 07858592.4
(22) Date de dépôt: 16.10.2007
(51) Int. Cl.: C04B 35/80, C04B 35/573, C04B 35/56

(54) **PROCEDE DE FABRICATION DE PIECE EN MATERIAU COMPOSITE A MATRICE CERAMIQUE CONTENANT DES PHASES DE MATRICE CICATRISANTE ET DEVIATRICE DE FISSURES**
VERFAHREN ZUR HERSTELLUNG EINES ELEMENTS AUS EINER KERAMIKMATRIX-ZUSAMMENSETZUNG MIT MATRIXPHASEN ZUR REPARATUR UND DEFLEKTION VON SPRÜNGEN
PROCESS FOR MANUFACTURING A PART MADE OF A CERAMIC MATRIX COMPOSITE CONTAINING MATRIX PHASES FOR HEALING AND DEFLECTING CRACKS

(30) Priorité: 17.10.2006 FR 0654326
(43) Date de publication de la demande: 03.06.2009
(73) Titulaire: Snecma Propulsion Solide, 33187 Le Haillan Cedex (FR)
(72) Inventeur: PAILLER, René, 33610 Cestas (FR); EBERLING-FUX, Nicolas, 33400 Talence (FR); PHILIPPE, Eric, 33700 Merignac (FR); BERTRAND, Sébastien, 33480 Moulis-en-Médoc (FR)
(74) Mandataire: Joly, Jean-Jacques
(86) Numéro de dépôt international: PCT/FR2007/052166
(87) Numéro de publication internationale: WO 2008/047038

(56) Documents cités:
- FR-A1- 2 675 141
- US-A- 5 094 901
- US-A- 5 962 103
- CHAWLA N ET AL: "High-frequency fatigue behavior of woven-fiber-fabric-reinforced polymer-derived ceramic-matrix composites" JOURNAL OF THE AMERICAN CERAMIC SOCIETY AMERICAN CERAMIC SOC USA, vol. 81, no. 5, mai 1998 (1998-05), pages 1221-1230, XP002435107 ISSN: 0002-7820
- MORAES K ET AL: "Microstructure and indentation fracture behavior of SiC-BN composites derived from blended precursors of AHPCS and polyborazylene" CHEMISTRY OF MATERIALS AMERICAN CHEM. SOC USA, vol. 16, no. 1, 13 janvier 2004 (2004-01-13), pages 125-132, XP002435108 ISSN: 0897-4756

## Description

### Arrière-plan de l'invention

L'invention concerne la fabrication de pièces en matériau composite à matrice céramique (ou CMC).

Les CMC sont formés d'un renfort fibreux réfractaire, en fibres de carbone ou de céramique, et d'une matrice céramique. La fabrication de pièces en CMC comprend habituellement la réalisation d'une structure fibreuse, ou préforme, destinée à constituer le renfort fibreux du matériau composite, et la densification de la préforme par le matériau céramique de la matrice.

Les CMC présentent des propriétés mécaniques qui les rendent aptes à constituer des pièces structurelles et présentent la capacité de conserver ces propriétés à des températures élevées en milieu oxydant.

Toutefois, que ce soit déjà au stade de la fabrication ou par suite de l'exposition à des contraintes thermo-mécaniques, les CMC sont sujets à la fissuration de la matrice céramique. Il est souhaitable d'éviter une propagation des fissures, notamment jusqu'aux fibres qui pourraient alors être rompues avec amoindrissement des propriétés mécaniques du matériau composite. Il est connu à cet effet de revêtir les fibres d'un revêtement d'interphase fibres-matrice ayant une capacité de déviation de fissures se propageant dans la matrice et atteignant le revêtement d'interphase tout en assurant une liaison fibres-matrice conférant des propriétés mécaniques souhaitées au matériau composite. Des revêtements d'interphase déviateurs de fissures sont typiquement en carbone pyrolytique (PyC) ou en nitrure de bore (BN), comme décrit notamment dans le document US 4 752 503. Il est connu également d'intercaler des phases continues déviatrices de fissures en PyC ou BN entre des phases de matrice céramique comme décrit dans le document US 5 079 039.

Il est souhaitable en outre que l'apparition de fissures ne favorise pas l'accès d'une atmosphère oxydante au coeur du matériau. En effet, un tel accès pourrait avoir des conséquences dommageables sur les fibres, si elles sont en carbone, et sur le revêtement d'interphase. Il est connu à cet effet de prévoir au sein de la matrice une ou plusieurs phases cicatrisantes, c'est-à-dire capables de cicatriser des fissures apparaissant dans la matrice. De telles phases de matrice cicatrisantes sont typiquement en des composés, notamment des composés borés, qui sont susceptibles de former, en présence d'oxygène, des compositions vitreuses qui passent à l'état pâteux et ont alors une action cicatrisante dans un certain domaine de températures. On pourra se référer, entre autres, au document US 5 965 266 qui décrit la formation de phases continues auto-cicatrisantes au sein de la matrice.

Dans les documents précités, la réalisation d'interphases ou de phases de matrice ayant des propriétés de déviation de fissures ou de cicatrisation fait appel à la technique d'infiltration chimique en phase gazeuse (ou CVI pour « Chemical Vapour Infiltration »). Cette technique est bien maîtrisée, mais requiert des durées très longues et est donc assez coûteuse. En outre, la formation par CVI de phases de matrice de natures différentes impose des changements dans la nature de la phase gazeuse réactionnelle utilisée et dans les paramètres du processus CVI (température, pression, débit de gaz,...).

Dans le document US 5 094 901, il est proposé d'introduire dans la structure fibreuse des charges aptes à produire un effet cicatrisant, avant de réaliser une interphase fibres-matrice par CVI et de former une matrice céramique. Les charges sont typiquement en un ou plusieurs matériaux capables, en présence d'oxygène, de former B₂O₃ et éventuellement SiO₂ Des poudres de B₄C, SiB₆ ou BN peuvent être utilisées qui sont introduites dans la structure fibreuse en étant dispersées dans une solution de résine dissoute dans un solvant puis en imprégnant la texture fibreuse avec la suspension ainsi obtenue. La résine est carbonisée avant formation de l'interphase. On notera que les poudres de précurseur de B₂O₃ et éventuellement de SiO₂ sont mises en place seulement au niveau des fibres de la structure fibreuse de renfort et de l'interphase fibres-matrice, la matrice étant ensuite formée par CVI.

Dans le document US 5 962 103, un procédé d'obtention de composite à matrice céramique SiC-Si comprend la formation sur les fibres d'une structure fibreuse d'un revêtement d'interphase fibres-matrice, l'introduction de poudres C ou SiC ou C+SiC et d'un composé du bore, et l'infiltration par du silicium fondu. Un matériau composite est ainsi obtenu dont la matrice a des propriétés auto-cicatrisantes.

### Objet et résumé de l'invention

L'invention a pour but de fournir un procédé permettant de façon simple et rapide d'obtenir des CMC avec au moins une phase de matrice cicatrisante et au moins une phase de matrice déviatrice de fissures.

Ce but est atteint grâce à un procédé comprenant les étapes de :
- formation d'une structure de renfort fibreuse poreuse,
- introduction dans la porosité de la structure fibreuse de poudres contenant des éléments constitutifs de la matrice du matériau composite, et
- formation d'au moins une partie principale de la matrice à partir desdites poudres, par voie réactive entre lesdites poudres ou par voie réactive entre au moins une partie desdites poudres et au moins un élément additionnel apporté,
- les poudres introduites dans la structure fibreuse et le ou les élément(s) apporté(s) comprenant des éléments formant au moins une phase de matrice discontinue cicatrisante comportant un composé boré et au moins une phase de matrice discontinue déviatrice de fissures comportant un composé à structure lamellaire.

Par voie réactive, on entend ici :
- une réaction chimique entre une ou des poudres introduites dans la structure fibreuse et au moins un élément additionnel apporté ensuite, par exemple une réaction avec au moins un élément apporté tel que du silicium en fusion, du titane en fusion, un alliage contenant du silicium ou du titane en fusion, ou du zirconium en fusion, ou
- un frittage des poudres introduites dans la structure fibreuse, par exemple un frittage à chaud avec champ électrique pulsé dénommé aussi frittage flash ou SPS (pour "Spark Plasma Sintering").

Par phase de matrice discontinue, on entend ici une phase de matrice formée d'éléments ou "grains" discrets qui sont dispersés au sein de la matrice, c'est-à-dire ne formant pas une phase s'étendant continûment dans la matrice, comme c'est le cas d'une phase de matrice obtenue par CVI.

Par composé à structure lamellaire déviateur de fissures on entend ici un composé à structure en feuillets qui peut s'opposer à une propagation directe de fissures en dissipant l'énergie de fissuration par séparation entre feuillets de la structure.

Le procédé est remarquable en ce que la matrice est formée principalement par voie réactive en utilisant des poudres introduites dans la structure fibreuse, donc de façon plus rapide en comparaison avec un processus de densification CVI, et en ce que la ou chaque phase de matrice cicatrisante et la ou chaque phase de matrice déviatrice de fissures est une phase discontinue dispersée au sein de la matrice céramique. La déposante a pu observer que non seulement la fonction de cicatrisation mais aussi, et de façon plus inattendue, la fonction de déviation de fissures, peuvent être remplies de façon efficace par des éléments discrets de phase de matrice discontinue et ne requièrent pas des phases de matrice continues telles qu'obtenues par un processus CVI.

Lesdits éléments formant les phases de matrice discontinue cicatrisante et déviatrice de fissures comportent avantageusement les éléments B et C et au moins l'un des éléments Si et Ti.

Selon un mode particulier de mise en oeuvre de l'invention, la formation d'au moins une partie principale de la matrice est obtenue avec réaction chimique entre lesdites poudres introduites dans la structure fibreuse et au moins un élément additionnel apporté.

L'élément additionnel peut être du silicium, du titane ou du zirconium, apporté tel quel ou sous forme de composé ou d'alliage.

Les poudres introduites dans la structure fibreuse et le ou les élément(s) apporté(s) peuvent avantageusement comprendre les éléments B, C, Si et Ti pour former au moins une phase de matrice discontinue cicatrisante comportant un composé boré et au moins une phase de matrice discontinue déviatrice de fissures comportant du silico-carbure de titane Ti₃SiC₂ obtenu par réaction chimique.

Dans une première variante, lesdites poudres introduites dans la structure fibreuse comprennent les éléments B, C et Ti et l'on apporte au moins l'élément Si sous forme de silicium en fusion. On pourra aussi apporter successivement l'élément Si puis l'élément Ti sous forme de silicium en fusion et de titane ou alliage de titane en fusion, respectivement. Les éléments B, C et Ti peuvent être sous forme de carbure de titane et de carbure de bore.

Dans une deuxième variante, lesdites poudres introduites dans la structure fibreuse comprennent les éléments B, C et Si et l'on apporte au moins l'élément Ti sous forme de titane en fusion ou d'un alliage contenant du titane en fusion. On pourra aussi apporter successivement l'élément Ti puis l'élément Si sous forme de titane ou alliage de titane en fusion et de silicium en fusion, respectivement. Les éléments B, C et Si peuvent être sous forme de carbure de silicium et de carbure de bore.

Dans une troisième variante, lesdites poudres introduites dans la structure fibreuse comprennent les éléments B, C et l'on apporte simultanément au moins des éléments Si et Ti sous forme de silicium et de titane ou d'alliage de titane en fusion.

Selon un autre mode de mise en oeuvre de l'invention, la formation d'au moins une partie principale de la matrice est obtenue par frittage desdites poudres introduites dans la structure fibreuse.

Le frittage peut être réalisé par un processus de frittage SPS.

Les poudres introduites dans la structure fibreuse peuvent alors comprendre une poudre de silico-carbure de titane, composé déviateur de fissures (Ti₃SiC₂) et/ou une poudre de nitrure de bore, composé déviateur de fissures (BN).

Avant introduction des poudres dans la structure fibreuse, un revêtement d'interphase peut être formé sur les fibres de celle-ci, par exemple un revêtement PyC ou BN. Le revêtement d'interphase peut être formé par CVI. Le revêtement d'interphase peut contribuer à protéger les fibres de la structure fibreuse, notamment lorsqu'elles sont en carbone, lorsque la matrice est au moins en partie réalisée par réaction chimique, une partie du revêtement d'interphase pouvant alors être consommée. Un revêtement de protection, par exemple en SiC peut éventuellement être formé sur le revêtement d'interphase, par exemple par CVI, pour constituer une barrière de réaction et éviter une consommation du revêtement d'interphase lors de la formation d'au moins une partie de la matrice par réaction chimique.

Différentes techniques connues en elles-mêmes peuvent être utilisées pour l'introduction des poudres dans la structure fibreuse, telles que l'électrophorèse, l'aspiration de poudres sous vide et l'imprégnation par une suspension de poudres dans un liquide.

De préférence, les poudres ont une dimension moyenne inférieure à 1 micron, typiquement comprise entre 20 nm et 100 nm.

L'invention vise aussi une pièce en matériau composite à matrice céramique telle qu'elle peut être obtenue par le procédé ci-dessus, pièce dans laquelle la matrice a au moins une partie principale obtenue par voie réactive à partir de poudres et comprenant au moins une phase de matrice discontinue cicatrisante comportant un composé boré dispersé au sein de la matrice et au moins une phase de matrice discontinue comportant un composé à structure lamellaire dispersé au sein de la matrice.

Le composé à structure lamellaire peut être Ti₃SiC₂ et/ou BN.

### Brève description des dessins

Dans la description détaillée qui suit, il sera fait référence aux dessins annexés sur lesquels :
- les figures 1 et 2 montrent de façon simplifiée des étapes de mise en oeuvre du procédé selon l'invention selon deux modes particuliers de réalisation ;
- la figure 3 illustre très schématiquement une installation pour introduire des poudres dans une structure fibreuse poreuse par électrophorèse ; et
- les figures 4 à 16 sont des microphotographies montrant la formation de phases de matrice discontinue et la déviation de fissures dans des matériaux CMC obtenus conformément à l'invention.

### Description détaillée de modes de réalisation de l'invention

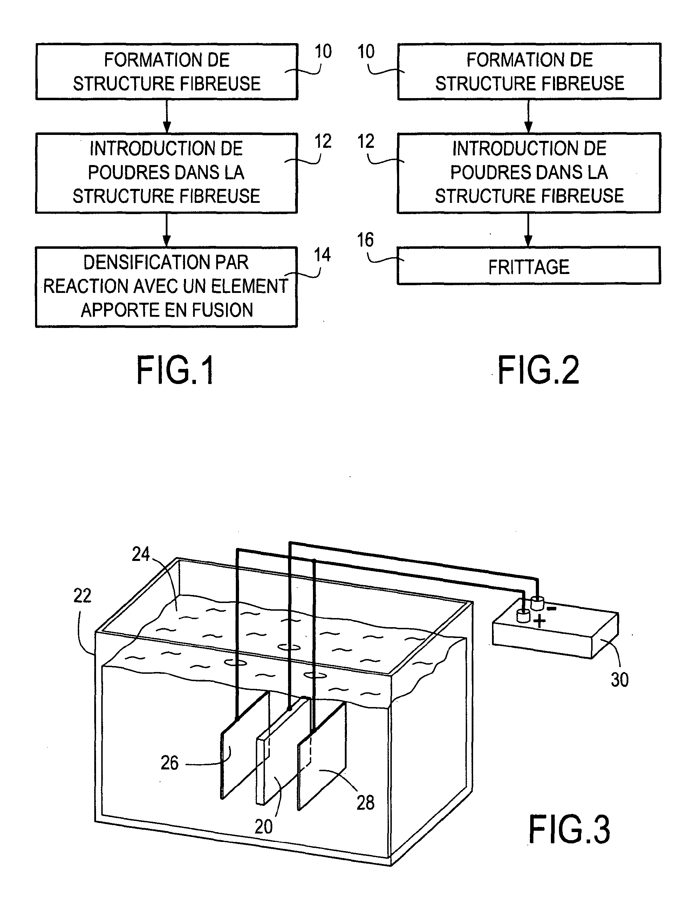

Dans les modes de réalisation des figures 1 et 2, une première étape 10 du procédé consiste à former une structure fibreuse poreuse apte à constituer le renfort fibreux d'une pièce en matériau CMC à réaliser. Les fibres du renfort peuvent être des fibres de carbone ou des fibres céramiques, telles que des fibres SiC, éventuellement revêtues de carbone.

La formation d'une telle structure fibreuse de renfort, ou préforme fibreuse, est une opération bien connue en soi. On peut former une structure fibreuse tridimensionnelle à partir d'éléments fibreux unidirectionnels, tels que des fils, câbles ou rubans, par un processus de bobinage ou par un processus de tissage, tressage ou tricotage tridimensionnel. On peut aussi former une structure fibreuse tridimensionnelle à partir de strates fibreuses bidimensionnelles qui sont superposées et avantageusement liées entre elles par exemple par aiguilletage ou implantation de fils ou autres éléments unidirectionnels transversalement par rapport aux strates. Les strates fibreuses bidimensionnelles peuvent être des tissus, ou des nappes unidirectionnelles ou encore des nappes multidirectionnelles formées par superposition et liaison de nappes unidirectionnelles dans des directions différentes.

Avantageusement, un revêtement d'interphase est formé sur les fibres de la structure fibreuse de renfort. De façon connue, un tel revêtement d'interphase peut être en PyC ou BN, comme mentionné plus haut. Le revêtement d'interphase peut être formé sur les fibres par CVI, avant ou après réalisation de la structure fibreuse. Son épaisseur est de préférence comprise entre 0,1 micron et 2 microns.

Un revêtement de protection peut être formé sur le revêtement d'interphase afin de protéger celui-ci et les fibres sous-jacentes contre une éventuelle attaque chimique lorsque la réalisation de la matrice du matériau CMC comprend une réaction chimique avec un élément apporté tel que du silicium ou du titane en fusion. Un tel revêtement formant barrière de protection est par exemple en SiC. Le revêtement de protection peut être formé sur le revêtement d'interphase par CVI, avant ou après réalisation de la structure fibreuse. Son épaisseur est de préférence comprise entre 0,1 micron et 2 microns.

Dans une étape suivante 12 du procédé selon l'invention, la structure fibreuse poreuse avec les fibres avantageusement munies d'un revêtement d'interphase et éventuellement munies d'un revêtement de protection, a sa porosité au moins en partie comblée par introduction de poudres.

On utilise des poudres apportant au moins une partie des éléments nécessaires pour la formation d'au moins une partie principale de la matrice céramique comprenant au moins une phase de matrice discontinue cicatrisante comportant un composé boré et au moins une phase de matrice discontinue comportant un composé à structure lamellaire déviatrice de fissures.

Les poudres introduites dans la structure fibreuse ont une granulométrie faible pour pouvoir pénétrer dans la porosité de la structure fibreuse jusqu'au coeur de celle-ci. La dimension moyenne des poudres est ainsi choisie avantageusement inférieure à 1 micron, de préférence comprise entre 20 nm et 100 nm.

Différents procédés connus peuvent être utilisés pour introduire les poudres dans la porosité de la structure fibreuse.

Un premier procédé consiste à imprégner la structure fibreuse par une suspension contenant les poudres. L'imprégnation peut être réalisée sous pression avec immersion de la structure fibreuse dans un bain contenant la suspension.

Un deuxième procédé consiste à réaliser une aspiration des poudres sous vide, en procédant d'une façon similaire à celle décrite dans le document US 5 352 484 pour l'introduction de poudre de carbone dans un substrat poreux. Une suspension contenant les poudres est amenée d'un côté de la structure fibreuse et une différence de pression est établie pour forcer la suspension à traverser la structure fibreuse, un filtrage étant réalisé de l'autre côté de la structure fibreuse pour retenir les poudres à l'intérieur de celle-ci.

Un troisième procédé consiste à utiliser l'électrophorèse. Comme montré très schématiquement par la figure 3, une structure fibreuse poreuse 20, dans l'exemple illustré sous forme de plaque, est immergée dans un bac 22 contenant une suspension 24 des poudres à introduire dans la structure fibreuse. La structure fibreuse 20 est placée entre deux électrodes 26, 28 par exemple en graphite. Le processus d'électrophorèse est utilisable avec une structure fibreuse conductrice de l'électricité, telle qu'une structure fibreuse en fibres de carbone ou en fibres céramique, par exemple des fibres de SiC, revêtues de carbone obtenu notamment par voie pyrolytique. Un circuit 30 d'alimentation en tension continue a une borne reliée en parallèle aux électrodes 26, 28 et une autre borne reliée à la structure fibreuse 20. De la sorte, les particules de poudre chargées électriquement migrent vers la structure fibreuse 20 et comblent progressivement sa porosité.

Après introduction des poudres, un séchage est réalisé.

Dans les modes de réalisation des figures 1 et 2, des poudres de composés céramiques peuvent être utilisées pour contribuer directement à la formation d'une ou plusieurs phases de matrice céramique discontinue, non nécessairement cicatrisante ou déviatrice de fissures. De telles poudres peuvent par exemple être des poudres de carbure de silicium SiC et/ou de carbure de titane TiC.

En outre, toujours dans les modes de réalisation des figures 1 et 2, des poudres de composés borés tels que notamment du carbure de bore B₄C, de l'hexaborure de silicium SiB₆, du diborure de titane TiB₂ et/ou des borures d'aluminium AlB₂, AlB₁₂ peuvent être utilisés pour contribuer à la formation d'au moins une phase de matrice discontinue cicatrisante.

Dans le mode de réalisation de la figure 1, une étape 14 est réalisée sur la préforme obtenue après introduction des poudres dans la structure fibreuse, étape au cours de laquelle une densification par réaction chimique avec au moins un élément additionnel apporté en fusion est effectuée, avec formation d'une phase de matrice discontinue.

L'élément additionnel apporté peut être notamment le silicium, le titane et/ou le zirconium, tel quel ou sous forme de composé ou d'alliage.

Avantageusement, une phase de matrice discontinue comportant le composé Ti₃SiC₂ déviateur de fissures est obtenue par réaction chimique entre des poudres introduites dans la structure fibreuse, telles que des poudres de SiC et/ou des poudres de TiC, et du titane ou du silicium apporté en fusion. Les poudres de SiC et/ou de TiC peuvent alors contribuer à la fois à la formation de phases de matrice céramique SiC et/ou TiC et de phase de matrice discontinue déviatrice de fissures.

Dans le cas où les poudres introduites dans la structure fibreuse comprennent une poudre de TiC, une réaction chimique de siliciuration est réalisée avec du silicium en fusion qui donne Ti₃SiC₂, mais aussi SiC et éventuellement TiSi₂ :

3TiC + 2Si → Ti₃SiC₂ + SiC

TiC + 3Si → TiSi₂ + SiC

SiC peut aussi être produit par réaction entre le silicium et du carbone qui peut provenir d'une interphase PyC présente sur les fibres, en l'absence de revêtement formant barrière de protection sur le revêtement d'interphase, ou de poudre de carbone introduite dans la structure fibreuse.

Du titane en fusion peut être ensuite apporté pour augmenter la quantité de Ti₃SiC₂ par réaction avec SiC et avec du carbone issu de SiC ou présent dans les poudres introduites dans la structure fibreuse, ou issu d'une interphase PyC formée sur les fibres.

SiC + C + 3Ti → Ti₃SiC₂

Des composés Ti₅Si₃ et TiC peuvent aussi être produits.

Dans le cas où les poudres introduites dans la structure fibreuse contiennent une poudre de SiC, une réaction chimique de titanisation est réalisée avec du titane en fusion qui donne Ti₃SiC₂ :

SiC + C + 3Ti → Ti₃SiC₂,

C étant présent dans les poudres introduites dans la structure fibreuse ou étant issu de SiC ou étant issu d'une interphase PyC en l'absence de revêtement formant barrière de réaction sur l'interphase PyC. Des composés Ti₅Si₃ et TiSi₂ peuvent aussi être produits.

Du silicium en fusion peut être ensuite apporté pour augmenter la quantité de Ti₃SiC₂ par réaction avec TiC et diminuer par conséquent la quantité de TiC.

La réaction chimique avec le silicium ou le titane en fusion est produite par infiltration de silicium ou de titane à l'état fondu dans la structure fibreuse dans laquelle des poudres ont été préalablement introduites. On peut aussi utiliser un alliage métallique de titane à l'état fondu, par exemple Ti₆Al₄V.

A cet effet, la préforme fibreuse peut de façon connue être placée dans un réceptacle ou creuset avec un barreau de silicium ou de titane ou alliage de titane. L'ensemble est placé dans un four pour élever la température au-delà du point de fusion du silicium ou du titane ou alliage de titane. Il n'est pas nécessaire que la préforme soit totalement immergée. Il suffit qu'une partie de la structure fibreuse soit au contact du silicium ou du titane en fusion, celui-ci progressant par capillarité au sein de la préforme. L'infiltration peut être facilitée par établissement d'une pression réduite dans le four en reliant celui-ci à une source de vide.

On peut aussi, également de façon connue, relier la préforme à un bain de silicium ou de titane ou alliage de titane en fusion au moyen d'un drain amenant jusqu'à la préforme le silicium ou titane ou alliage de titane en fusion par capillarité, l'imprégnation dans la porosité de la préforme se faisant également par capillarité. Le drain peut être en fibres réfractaires, par exemple en fibres de SiC ou (au moins à l'état initial) en fibres de carbone, sous forme de mèche, ruban ou analogue. Un tel processus est décrit notamment dans le document WO 2004/076381.

La température à laquelle le silicium ou le titane sont amenés est choisie supérieure au point de fusion, par exemple comprise entre 1450°C et 1500°C pour le silicium et entre 1700°C et 1750°C pour le titane. Dans le cas d'un alliage de titane tel que Ti₆Al₄V, le point de fusion est inférieur à celui du titane et une température comprise entre 1650°C et 1700°C peut être adoptée.

Dans ce qui précède, on a envisagé une siliciuration suivie d'une titanisation, ou inversement. En variante, on peut réaliser simultanément une siliciuration et une titanisation en apportant en même temps du silicium et du titane, ou un alliage de titane, à l'état fondu. Les poudres introduites préalablement dans la structure fibreuse comprennent alors au moins les éléments B et C, par exemple des poudres d'un composé boré et des poudres de carbone et/ou de carbure(s) tel que SiC et/ou TiC. L'apport simultané de Si et Ti peut être réalisé à partir de poudres de Si et Ti ou de poudres de Si et d'un alliage de Ti ou de poudres de Si et d'un composé de Ti tel que TiSi₂.

Dans le cas où une zirconisation est réalisée par apport de zirconium en fusion, la formation d'au moins une phase de matrice discontinue cicatrisante peut être obtenue par introduction préalable dans la structure fibreuse de poudres contenant un composé à structure lamellaire déviateur de fissures tel que BN.

Dans le mode de réalisation de la figure 2, après l'étape 12 d'introduction des poudres dans la structure fibreuse, une étape de frittage 16 est réalisée.

Ainsi, les poudres introduites dans la structure fibreuse doivent comprendre : les composés borés nécessaires à la formation d'au moins une phase de matrice discontinue cicatrisante ; des composés éventuels, tels TiC et/ou SiC formant au moins une phase de matrice céramique discontinue non cicatrisante et non déviatrice de fissures si une telle phase céramique est souhaitée ; et des composés à structure lamellaire contribuant directement à la formation d'une phase de matrice discontinue déviatrice de fissures. Ces derniers composés sont notamment Ti₃SiC₂ et/ou BN.

On peut utiliser un frittage naturel sans contrainte ou un frittage sous contrainte, par exemple par pressage à chaud ou, de préférence, un frittage à chaud avec application de champ électrique et pression, ou frittage SPS.

Un tel processus de frittage SPS est connu en soi. La structure fibreuse chargée de poudres est placée dans un réceptacle en matériau conducteur de l'électricité, typiquement en graphite, et un champ électrique continu ou pulsé est appliqué simultanément avec application d'une pression (typiquement entre 10 MPa et 100 MPa). Le frittage résulte de l'élévation de température et est favorisé semble-t-il par la génération d'un plasma entre particules voisines de poudre. En réalisant une structure fibreuse ayant une forme correspondant au renfort fibreux d'une pièce en matériau CMC à réaliser, on peut donc, avec un procédé selon l'invention, obtenir une matrice céramique avec au moins une phase cicatrisante discontinue comportant un composé bore dispersé au sein de la matrice et au moins une phase de matrice discontinue comportant un composé à structure lamellaire déviateur de fissures dispersé au sein de la matrice, le composé lamellaire étant notamment Ti₃SiC₂ et/ou BN.

Le procédé selon l'invention peut être utilisé pour former l'intégralité de la matrice du matériau CMC par densification d'une structure fibreuse dont les fibres peuvent être munies d'un revêtement d'interphase et éventuellement d'un revêtement supplémentaire de protection, ou peut être utilisé pour former une partie principale, c'est-à-dire une partie majoritaire de la matrice céramique. Dans ce dernier cas, une partie minoritaire de la matrice pourra être formée par un processus CVI classique ou par un processus en voie liquide classique, à savoir imprégnation par une composition liquide contenant un précurseur de matrice, tel qu'une résine, suivie d'une transformation du précurseur par pyrolyse.

Une telle partie minoritaire peut être notamment une phase de matrice initiale de consolidation liant les fibres de la structure fibreuse de façon suffisante pour conférer une tenue à celle-ci lui permettant d'être manipulée tout en conservant sa forme, seule une faible partie de la porosité de la structure fibreuse étant comblée. Une telle partie minoritaire peut être notamment une phase de matrice terminale réalisée après formation de la matrice principale obtenue par voie réactive, pour réduire la porosité résiduelle.

Des exemples de mise en oeuvre du procédé selon l'invention seront maintenant décrits.

### Exemple 1

Une structure fibreuse poreuse sous forme de plaque de 3 mm d'épaisseur a été réalisée par tissage tridimensionnel de fils en fibres continues de carbone, la structure fibreuse présentant un taux volumique de porosité de 70 % environ.

Un revêtement d'interphase PyC d'épaisseur égale à 1 micron environ a été formé sur les fibres par un processus CVI, après réalisation de la structure fibreuse, de façon bien connue en soi.

Des poudres de B₄C de dimension moyenne de 150 nm environ et des poudres de TiC de dimension moyenne de 30 nm environ ont été mises en suspension dans de l'éthanol avec homogénéisation de la suspension par agitation, dans des proportions volumiques de 11 % pour TiC et 2 % pour B₄C.

La suspension a été introduite dans un bac d'une installation d'électrophorèse telle que celle de la figure 3 et la structure fibreuse a été immergée dans le bac, entre des électrodes qui ont été alimentées pour engendrer un champ électrique de 40 V/cm environ, pendant 2 minutes environ. Après retrait du bac de la structure fibreuse chargée de poudres et séchage, on a mesuré un accroissement de masse relatif de 406 % environ, cet accroissement étant déterminé en calculant 100(m₁-m₀)/m₀ où m₁ est la masse de la structure fibreuse sèche chargée de poudres et m₀ est la masse de la structure fibreuse sèche avant introduction des poudres.

Une siliciuration a ensuite été réalisée, par réaction chimique entre les poudres introduites dans la structure fibreuse et du silicium apporté en fusion. A cet effet, la structure fibreuse chargée de poudres a été placée dans un creuset avec du silicium et a été introduite dans un four où la température a été portée à 1450°C environ tout en reliant l'enceinte du four à une source de vide pour favoriser la pénétration du silicium en fusion jusqu'au coeur de la structure fibreuse. La quantité de silicium a été choisie suffisante, mais sans excès notable, pour permettre la réaction complète :

3TiC + 2Si → Ti₃SiC₂ + SiC,

en fonction de la quantité de poudre de TiC présente dans la structure fibreuse. Après siliciuration, le taux volumique de porosité résiduelle était d'environ 17 % et la densité atteinte était d'environ 2,9.

Le diagramme de phases observées par diffraction des rayons X, ou diagramme de phases par XRD, révèle notamment la présence dans la matrice des phases Ti₃SiC₂ et SiC, mais aussi des phases TiC, TiSi₂ et TiB₂. Outre la réaction ci-avant donnant Ti₃SiC₂ et SiC, il est supposé que les réactions suivantes se produisent aussi :

C + Si → SiC (C provenant de l'interphase PyC)

TiC + 3Si → TiSi₂ + SiC

B₄C + 2TiC + 3Si → 2TiB₂ + 3SiC.

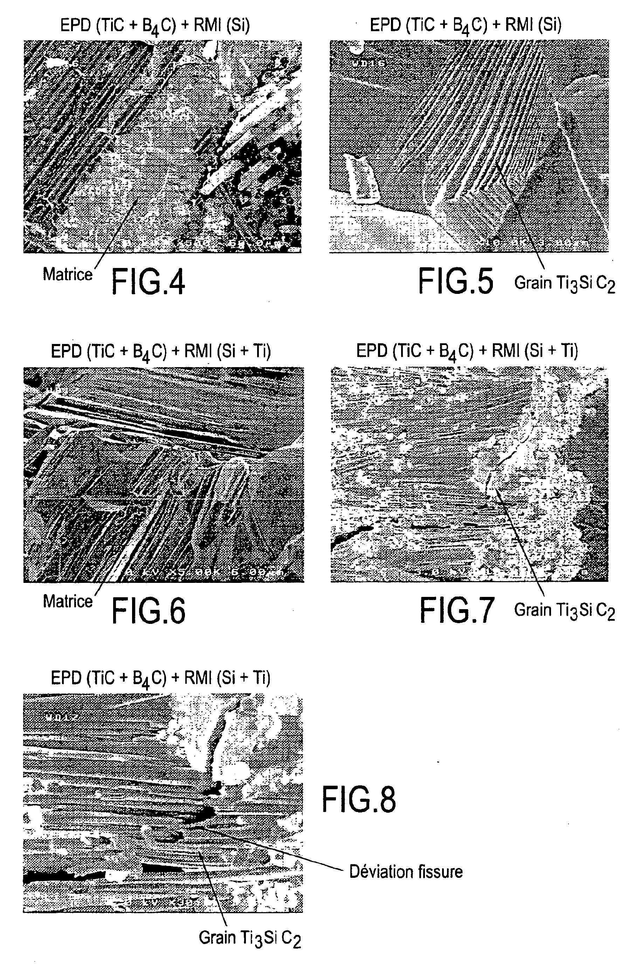

Les microphotographies des figures 4 et 5 montrent respectivement la matrice céramique dense obtenue et, à échelle plus petite, un grain de Ti₃SiC₂ à structure lamellaire caractéristique. Dans les légendes des figures 4, 5 et suivantes, les termes "EPD" et "RMI" désignent respectivement un processus d'introduction ou dépôt de poudres par électrophorèse ("ElectroPhorese Deposition") et un processus d'infiltration d'élément en fusion réactif ("Reactive Melt Infiltration").

### Exemple 2

On a procédé comme dans l'exemple 1 mais en limitant la siliciuration pour obtenir après celle-ci un taux volumique de porosité résiduelle de 21 % environ et une densité de 2,5 environ.

Une "titanisation" a ensuite été réalisée par réaction chimique entre, d'une part, les poudres introduites dans la structure fibreuse et des phases formées lors de la siliciuration et, d'autre part, du titane apporté en fusion. A cet effet, la pièce obtenue après siliciuration a été placée dans un creuset avec un barreau de titane et a été introduite dans un four où la température a été portée à une température de 1725°C environ tout en reliant l'enceinte du four à une source de vide. Après titanisation, le taux volumique de porosité résiduelle était réduit à 8 % environ et la densité augmentée à 3,6 environ.

Le diagramme de phases par XRD montre notamment la présence dans la matrice des phases Ti₃SiC₂, SiC, TiC, TiB₂, Ti_{S}Si₃ et Ti. La titanisation effectuée après siliciuration a pour effet d'augmenter la quantité de phase de matrice discontinue en Ti₃SiC₂ et de diminuer la quantité de phase de matrice SiC, par la réaction

SiC + C + 3Ti → Ti₃SiC₂,

C provenant de l'interphase PyC et/ou de phases carbures formées lors de la siliciuration.

Les microphotographies des figures 6 et 7 montrent la matrice obtenue avec la présence des grains de Ti₃SiC₂ dans la matrice. L'effet de déviation d'une fissure s'étant produite dans la matrice par un grain de Ti₃SiC₂ est montré sur la figure 8 à échelle plus réduite.

### Exemple 3

On a procédé comme dans l'exemple 1 mais en réalisant sur les fibres de la structure fibreuse une interphase PyC de 2 microns d'épaisseur environ, en remplaçant la poudre de TiC par de la poudre de SiC (dans la même proportion volumique dans la suspension de poudres) de dimension moyenne de 50 nm environ et en remplaçant la siliciuration par une titanisation.

La titanisation de la structure fibreuse chargée de poudres de SiC et B₄C a été réalisée par réaction chimique avec du titane apporté en fusion, de la même façon que dans l'exemple 2. On a obtenu une pièce en matériau CMC avec un taux résiduel de porosité de 10 % environ et une densité de 3,5 environ.

Le diagramme de phases par XRD montre notamment la présence dans la matrice des phases Ti₃SiC₂, SiC, TiC, TiB₂, Ti₅Si₃, le composé Ti₃SiC₂ étant obtenu par la même réaction que dans l'exemple 2 :

SiC + C + 3Ti → Ti₃SiC₂,

C provenant de l'interphase PyC.

L'épaisseur relativement grande de l'interphase PyC sur les fibres permet de sacrifier une partie de l'interphase sans atteindre les fibres.

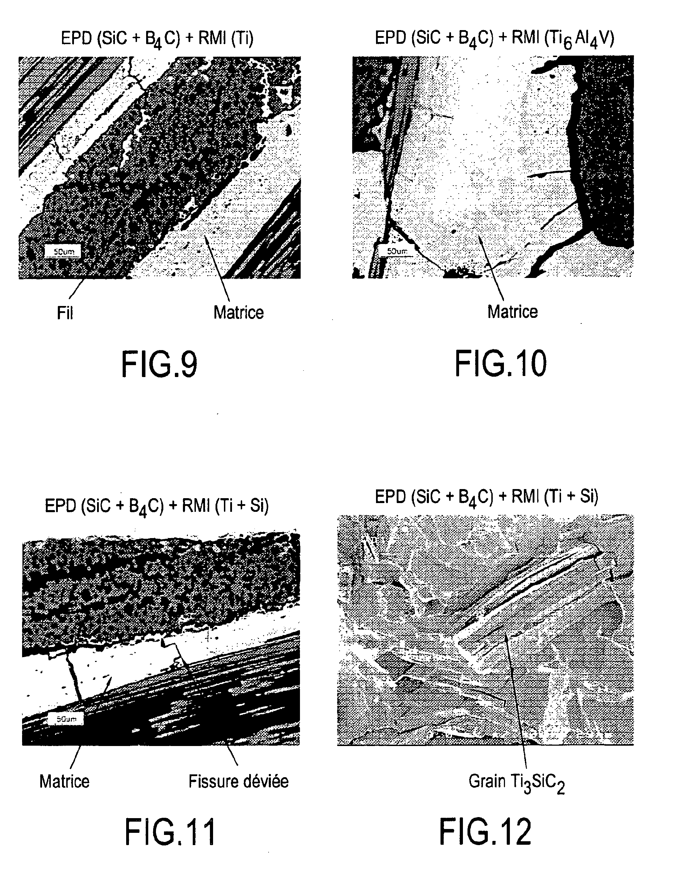

La microphotographie de la figure 9 montre la matrice dense obtenue.

### Exemple 4

On a procédé comme dans l'exemple 3, mais en effectuant la titanisation par réaction avec un alliage en fusion de titane, aluminium et vanadium Ti₆Al₄V, à une température de 1675°C environ. Après titanisation, le taux volumique de porosité résiduelle était de 5 % environ et la densité de 3,3 environ.

Le diagramme de phases par XRD montre la présence dans la matrice des phases Ti₃SiC₂, SiC, TiC, Ti, TiB₂, Ti₅Si₃.

La microphotographie de la figure 10 montre la matrice dense obtenue.

L'intérêt de l'alliage Ti₆Al₄V est de pouvoir réaliser une titanisation à une température inférieure à celle requise pour une titanisation avec du titane seul.

### Exemple 5

On a procédé comme dans l'exemple 3 mais en limitant la titanisation pour obtenir après celle-ci un taux volumique de porosité résiduelle de 11 % environ et une densité de 3,5 environ.

Une siliciuration a été ensuite effectuée dans des conditions semblables à celles décrites dans l'exemple 1. Après siliciuration, le taux volumique de porosité résiduelle était réduit à 8 % environ et la densité atteignait 3,4 environ.

Le diagramme de phase par XRD montre la présence dans la matrice des phases Ti₃SiC₂, SiC, TiC, TiB₂, TiSi₂. La siliciuration effectuée après titanisation a pour effet d'augmenter la quantité de phase de matrice discontinue en Ti₃SiC₂ et de diminuer la quantité de phase de matrice TiC par la réaction :

3TiC + 2Si → Ti₃SiC₂ + SiC.

Les microphotographies des figures 11 et 12 montrent la matrice dense obtenue et, à échelle plus réduite, un grain de Ti₃SiC₂ à structure lamellaire.

### Exemple 6

Des structures fibreuses sous forme d'échantillons cylindriques de diamètre de 50 mm environ et d'épaisseur de 2 mm environ ont été obtenues par découpe dans une plaque fibreuse réalisée par tissage tridimensionnel de fils en fibres continues de carbone.

Un revêtement d'interphase PyC d'épaisseur environ égale à 0,1 micron a été formé sur les fibres par un processus CVI, après réalisation des échantillons.

Des poudres de SiC de dimension moyenne de 50 nm environ et des poudres de BN de dimension moyenne de 140 nm environ ont été mises en suspension dans de l'éthanol avec homogénéisation de la suspension par agitation, les proportions volumiques de SiC et de BN étant respectivement d'environ 11 % et 3 %.

On a procédé à l'introduction des poudres SiC et BN dans des échantillons de structure fibreuse en utilisant un processus d'électrophorèse comme dans l'exemple 1. Un accroissement de masse relatif de 330 % environ a été mesuré sur les échantillons chargés de poudres et séchés.

Un frittage SPS a été ensuite réalisé sur des échantillons chargés de poudres. Avec une température de frittage SPS de 1600°C environ, on a pu obtenir une pièce ayant un taux volumique de porosité résiduelle de 22 % environ et une densité de 2,35 environ. Avec une température de frittage SPS de 1650°C environ, on a pu obtenir une pièce ayant un taux volumique de porosité résiduelle de 16 % environ et une densité de 2,36 environ.

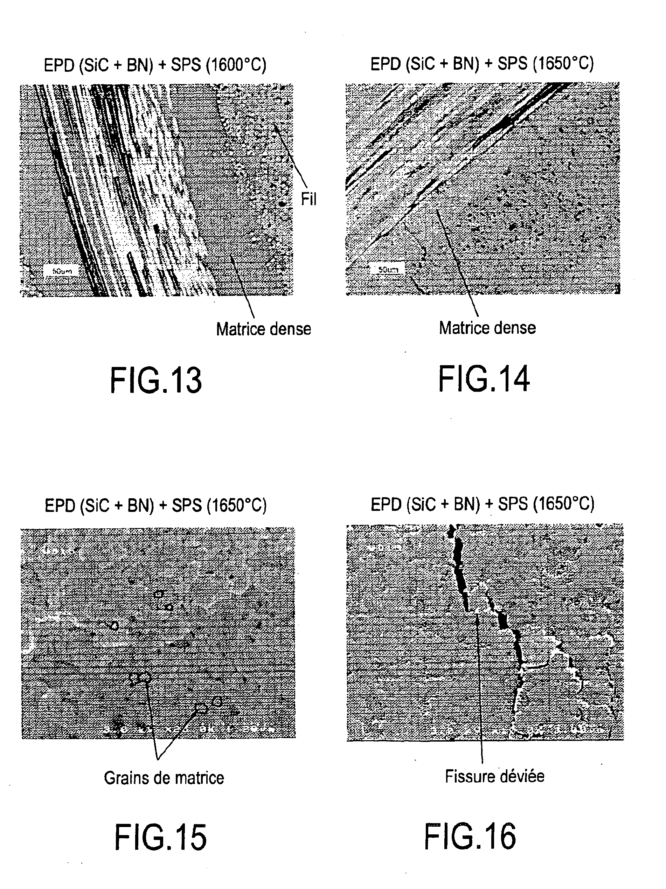

Les microphotographies des figures 13 et 14 montrent des matrices denses obtenues pour des températures de frittage SPS respectivement de 1600°C et 1650°C, environ, et la figure 15 montre à l'échelle plus réduite la taille moyenne et la morphologie des grains de matrice discontinue dans le cas d'un frittage SPS à 1650°C.

A titre de comparaison, un échantillon de structure fibreuse semblable à celui utilisé dans cet exemple, mais avec un revêtement d'interphase d'une épaisseur de 0,3 micron a été densifié par une matrice SiC par processus CVI. On a pu obtenir un taux volumique de porosité résiduelle de 15 % environ et une densité de 2,3 environ. Le procédé par introduction de poudres et frittage SPS à 1650°C a permis d'obtenir des valeurs très voisines, tout en étant beaucoup plus rapide à réaliser et en permettant la formation d'une phase de matrice discontinue en BN qui constitue à la fois un composé à structure lamellaire déviateur de fissures et un composé boré constitutif d'une phase de matrice discontinue cicatrisante.

Un essai au choc (essai de dureté Vickers) a été effectué sur une pièce obtenue après frittage SPS à 1650°C. La figure 16 est une microphotographie montrant une fissure produite par le choc et l'effet de déviation de fissure apporté par la présence du composé BN à structure lamellaire.

## Revendications

1. Procédé de fabrication d'une pièce en matériau composite à matrice céramique comprenant les étapes de :
- formation d'une structure de renfort fibreuse poreuse,
- introduction dans la porosité de la structure fibreuse de poudres contenant des éléments constitutifs de la matrice du matériau composite, et
- formation d'au moins une partie principale de la matrice à partir desdites poudres, par voie réactive entre lesdites poudres ou par voie réactive entre au moins une partie desdites poudres et au moins un élément additionnel apporté,
- les poudres introduites dans la structure fibreuse et le ou les élément(s) apporté(s) comprenant des éléments formant au moins une phase de matrice discontinue cicatrisante comportant un composé boré et au moins une phase de matrice discontinue déviatrice de fissures comportant un composé à structure lamellaire.

2. Procédé selon la revendication 1, **caractérisé en ce que** lesdits éléments formant les phases de matrice discontinue cicatrisante et déviatrice de fissures comportent les éléments B et C et l'un au moins des éléments Si et Ti.

3. Procédé selon l'une quelconque des revendications 1 et 2, dans lequel la formation d'au moins une partie principale de la matrice est obtenue avec réaction chimique entre au moins une partie desdites poudres introduites dans la structure fibreuse et au moins un élément additionnel apporté.

4. Procédé selon l'une quelconque des revendications 2 et 3, **caractérisé en ce que** l'élément additionnel apporté est l'un au moins des éléments du groupe constitué par le silicium, le titane et le zirconium.

5. Procédé selon l'une quelconque des revendications 2 à 4, dans lequel lesdites poudres introduites dans la structure fibreuse et le ou les élément(s) apporté(s) comprennent au moins les éléments B, C, Si et Ti pour former au moins une phase de matrice discontinue cicatrisante comportant un composé boré et au moins une phase de matrice discontinue déviatrice de fissures comportant le composé Ti₃SiC₂ obtenu par réaction chimique.

6. Procédé selon la revendication 5, dans lequel lesdites poudres introduites dans la structure fibreuse comprennent au moins les éléments B, C et Ti et l'on apporte au moins l'élément Si sous forme de silicium en fusion.

7. Procédé selon la revendication 5, dans lequel lesdites poudres introduites dans la structure fibreuse comprennent au moins les éléments B, C et Ti et l'on apporte successivement l'élément Si puis l'élément Ti sous forme de silicium en fusion et de titane ou alliage contenant du titane en fusion, respectivement.

8. Procédé selon l'une quelconque des revendications 6 et 7, dans lequel lesdites poudres introduites dans la structure fibreuse comprennent un carbure de titane et un carbure de bore.

9. Procédé selon la revendication 5, dans lequel lesdites poudres introduites dans la structure fibreuse comprennent au moins les éléments B, C et Si et l'on apporte au moins l'élément Ti sous forme de titane en fusion ou d'un alliage contenant du titane en fusion.

10. Procédé selon la revendication 5, dans lequel lesdites poudres introduites dans la structure fibreuse comprennent au moins les éléments B, C et Si et l'on apporte successivement l'élément Ti puis l'élément Si sous forme de titane en fusion ou d'un alliage contenant du titane en fusion et de silicium en fusion, respectivement.

11. Procédé selon l'une quelconque des revendications 9 et 10, dans lequel lesdites poudres introduites dans la structure fibreuse comprennent un carbure de silicium et un carbure de bore.

12. Procédé selon la revendication 5, **caractérisé en ce que** lesdites poudres introduites dans la structure fibreuse comprennent au moins des éléments B, C et l'on apporte simultanément au moins les éléments Si et Ti sous forme de silicium et de titane ou d'alliage ou composé de titane en fusion.

13. Procédé selon l'une quelconque des revendications 1 et 2, dans lequel la formation d'au moins une partie principale de la matrice est obtenue par frittage desdites poudres introduites dans la structure fibreuse.

14. Procédé selon la revendication 13, dans lequel lesdites poudres introduites dans la structure fibreuse comprennent une poudre du composé déviateur de fissures Ti₃SiC₂.

15. Procédé selon l'une quelconque des revendications 13 et 14, dans lequel lesdites poudres introduites dans la structure fibreuse comprennent une poudre du composé déviateur de fissures BN.

16. Procédé selon l'une quelconque des revendications 13 à 15, dans lequel le frittage est réalisé par le processus de frittage flash, ou SPS.

17. Procédé selon l'une quelconque des revendications 1 à 16, dans lequel, avant introduction desdites poudres dans la structure fibreuse, un revêtement d'interphase est formé sur les fibres de la structure fibreuse.

18. Procédé selon la revendication 17, dans lequel un revêtement de protection formant barrière de réaction, est formé sur le revêtement d'interphase.

19. Procédé selon l'une quelconque des revendications 1 à 18, dans lequel lesdites poudres introduites dans la structure fibreuse ont une dimension moyenne inférieure à 1 micron.

20. Procédé selon la revendication 19, dans lequel lesdites poudres ont une dimension moyenne comprise entre 20 nm et 100 nm.

## Claims

1. A method of fabricating a part of ceramic matrix composite material, the method comprising the steps of:
. forming a porous fiber-reinforcing structure;
. introducing into the pores of the fiber structure powders containing elements for constituting the composite material matrix; and
. forming at least a main fraction of the matrix from said powders by causing a reaction to take place between said powders or between at least a portion of said powders and at least one delivered additional element;
the powders introduced into the fiber structure and the delivered additional element(s) comprising elements that form at least one healing discontinuous matrix phase including a boron compound and at least one crack-deflecting discontinuous matrix phase including a compound of lamellar structure.

2. A method according to claim 1, **characterized in that** said elements forming the crack-deflecting and healing discontinuous matrix phases include the elements B and C, and at least one of the elements Si and Ti.

3. A method according to claim 1 or claim 2, wherein at least a major fraction of the matrix is formed by chemical reaction between at least a portion of said powders introduced into the fiber structure and at least one delivered additional element.

4. A method according to claim 2 or claim 3, **characterized in that** the delivered additional element is at least one of the elements of the group constituted by silicon, titanium, and zirconium.

5. A method according to any one of claims 2 to 4, wherein said powders introduced into the fiber structure and the delivered additional element(s) comprise at least the elements B, C, Si, and Ti to form at least one healing discontinuous matrix phase including a boron compound and at least one crack-deflecting discontinuous matrix phase including the compound Ti₃SiC₂ obtained by chemical reaction.

6. A method according to claim 5, wherein said powders introduced into the fiber structure comprise at least the elements B, C, and Ti, and at least the element Si is delivered in the form of molten silicon.

7. A method according to claim 5, wherein said powders introduced into the fiber structure comprise at least the elements B, C, and Ti, and the element Si and then the element Ti are delivered successively in the form respectively of molten silicon and of molten titanium or titanium-containing alloy.

8. A method according to claim 6 or claim 7, wherein said powders introduced into the fiber structure comprising titanium carbide and boron carbide.

9. A method according to claim 5, wherein said powders introduced into the fiber structure comprise at least the elements B, C, and Si, and at least the element Ti is delivered in the form of molten titanium or a molten alloy containing titanium.

10. A method according to claim 5, wherein said powders introduced into the fiber structure comprise at least the elements B, C, and Si, and the element Ti and then the element Si are delivered successively in the form respectively of molten titanium or a molten alloy containing titanium, and of molten silicon.

11. A method according to claim 9 or claim 10, wherein said powders introduced in the fiber structure comprise a silicon carbide and a boron carbide.

12. A method according to claim 5, **characterized in that** said powders introduced into the fiber structure comprise at least the elements B and C, and at least the elements Si and Ti are delivered simultaneously in the form of molten silicon and titanium or titanium alloy or compound.

13. A method according to claim 1 or claim 2, wherein at least a major fraction of the matrix is formed by sintering said powders introduced into the fiber structure.

14. A method according to claim 13, wherein said powders introduced into the fiber structure comprise a powder of the crack-deflecting compound Ti₃SiC₂.

15. A method according to claim 13 or claim 14, wherein said powders introduced into the fiber structure comprise a powder of the crack-deflecting compound BN.

16. A method according to any one of claims 13 to 15, wherein the sintering is performed by the flash or SPS sintering process.

17. A method according to any one of claims 1 to 16, wherein, prior to introducing said powders into the fiber silicons, an interphase coating is formed on the fibers of the fiber structure.

18. A method according to claim 17, wherein a protective coating forming a reaction barrier is formed on the interphase coating.

19. A method according to any one of claims 1 to 18, wherein said powders introduced into the fiber structure have a mean size of less than 1 µm.

20. A method according to claim 19, wherein said powders have a mean size lying in the range 20 nm to 100 nm.

## Patentansprüche

1. Verfahren zur Herstellung eines Teils aus Keramikmatrix-Verbundwerkstoff, umfassend die Schritte des:
- Ausbildens einer porösen Faserverstärkungsstruktur,
- Einbringens von Pulvern, die Bestandteile der Matrix des Verbundwerkstoffs enthalten, in die Poren der Faserstruktur und des
- Ausbildens von wenigstens einem Hauptteil der Matrix aus den Pulvern auf reaktivem Weg zwischen den Pulvern oder auf reaktivem Weg zwischen wenigstens einem Teil der Pulver und wenigstens einem zugeführten zusätzlichen Element,
- wobei die in die Faserstruktur eingebrachten Pulver und das oder die zugeführte(n) Element(e) Elemente umfassen, die wenigstens eine diskontinuierliche heilungsfördernde Matrixphase, welche eine Borverbindung umfaßt, sowie wenigstens eine diskontinuierliche rißablenkende Matrixphase, welche eine Verbindung mit Lamellenstruktur umfaßt, bilden.

2. Verfahren nach Anspruch 1, **dadurch gekennzeichnet, daß** die Elemente, welche die diskontinuierlichen heilungsfördernden und rißablenkenden Matrixphasen bilden, die Elemente B und C sowie wenigstens eines der Elemente Si und Ti umfassen.

3. Verfahren nach einem der Ansprüche 1 und 2, wobei die Bildung von wenigstens einem Hauptteil der Matrix mittels chemischer Reaktion zwischen wenigstens einem Teil der in die Faserstruktur eingebrachten Pulver und wenigstens einem zugeführten zusätzlichen Element erreicht wird.

4. Verfahren nach einem der Ansprüche 2 und 3, **dadurch gekennzeichnet, daß** das zugeführte zusätzliche Element wenigstens eines der Elemente aus der Gruppe bestehend aus Silizium, Titan und Zirkonium ist.

5. Verfahren nach einem der Ansprüche 2 bis 4, wobei die in die Faserstruktur eingebrachten Pulver und das oder die zugeführte(n) Element(e) wenigstens die Elemente B, C, Si und Ti umfassen, um wenigstens eine diskontinuierliche heilungsfördernde Matrixphase, welche eine Borverbindung umfaßt, sowie wenigstens eine diskontinuierliche rißablenkende Matrixphase, welche die durch chemische Reaktion erhaltene Verbindung Ti₃SiC₂ umfaßt, zu bilden.

6. Verfahren nach Anspruch 5, wobei die in die Faserstruktur eingebrachten Pulver wenigstens die Elemente B, C und Ti umfassen und wenigstens das Element Si in Form von schmelzflüssigem Silizium zugeführt wird.

7. Verfahren nach Anspruch 5, wobei die in die Faserstruktur eingebrachten Pulver wenigstens die Elemente B, C und Ti umfassen und nacheinander das Element Si, dann das Element Ti in Form von schmelzflüssigem Silizium bzw. Titan oder einer Legierung, die schmelzflüssiges Titan enthält, zugeführt werden.

8. Verfahren nach einem der Ansprüche 6 und 7, wobei die in die Faserstruktur eingebrachten Pulver ein Titancarbid und ein Borcarbid umfassen.

9. Verfahren nach Anspruch 5, wobei die in die Faserstruktur eingebrachten Pulver wenigstens die Elemente B, C und Si umfassen und wenigstens das Element Ti in Form von schmelzflüssigem Titan oder einer Legierung, die schmelzflüssiges Titan enthält, zugeführt wird.

10. Verfahren nach Anspruch 5, wobei die in die Faserstruktur eingebrachten Pulver wenigstens die Elemente B, C und Si umfassen und nacheinander das Element Ti, dann das Element Si in Form von schmelzflüssigem Titan oder einer Legierung, die schmelzflüssiges Titan enthält, bzw. von schmelzflüssigem Silizium zugeführt werden.

11. Verfahren nach einem der Ansprüche 9 und 10, wobei die in die Faserstruktur eingebrachten Pulver ein Siliziumcarbid und ein Borcarbid umfassen.

12. Verfahren nach Anspruch 5, **dadurch gekennzeichnet, daß** die in die Faserstruktur eingebrachten Pulver wenigstens Elemente B, C umfassen und gleichzeitig wenigstens die Elemente Si und Ti in Form von Silizium und Titan oder Legierung oder Verbindung von Titan in schmelzflüssigem Zustand zugeführt werden.

13. Verfahren nach einem der Ansprüche 1 und 2, wobei die Bildung von wenigstens einem Hauptteil der Matrix durch Sintern der in die Faserstruktur eingebrachten Pulver erreicht wird.

14. Verfahren nach Anspruch 13, wobei die in die Faserstruktur eingebrachten Pulver ein Pulver der rißablenkenden Verbindung Ti₃SiC₂ umfassen.

15. Verfahren nach einem der Ansprüche 13 und 14, wobei die in die Faserstruktur eingebrachten Pulver ein Pulver der rißablenkenden Verbindung BN umfassen.

16. Verfahren nach einem der Ansprüche 13 bis 15, wobei das Sintern mittels des Flash-Sintering-Prozesses oder SPS durchgeführt wird.

17. Verfahren nach einem der Ansprüche 1 bis 16, wobei vor dem Einbringen der Pulver in die Faserstruktur auf den Fasern der Faserstruktur eine Zwischenphasen-Beschichtung ausgebildet wird.

18. Verfahren nach Anspruch 17, wobei eine eine Reaktionsbarriere bildende Schutzbeschichtung auf der Zwischenphasen-Beschichtung ausgebildet wird.

19. Verfahren nach einem der Ansprüche 1 bis 18, wobei die in die Faserstruktur eingebrachten Pulver eine mittlere Abmessung von unter 1 Mikron aufweisen.

20. Verfahren nach Anspruch 19, wobei die Pulver eine mittlere Abmessung im Bereich zwischen 20 nm und 100 nm aufweisen.
